# DEMANDE DE BREVET EUROPEEN

(11) **EP 0 966 170 A1**
(43) Date de publication de la demande: **22.12.1999**
(21) Numéro de dépôt: 99401268.0
(22) Date de dépôt: 27.05.1999
(51) Int. Cl.: H04Q 7/22, H04Q 7/32

(54) **Procédé pour l'envoi d'un groupe d'informations à un terminal radiotéléphonique en cours de communication, et terminal correspondant**

(30) Priorité: 08.06.1998 FR 9807163
(71) Demandeur: ALCATEL, 75008 Paris (FR)
(72) Inventeur: Gabou, Ronan, 75009 Paris (FR); Raoult, Frédéric, Shanghai (CN)
(74) Mandataire: Lamoureux, Bernard

(57) **Abrégé**

Procédé pour l'envoi d'un groupe d'informations, notamment d'informations de répertoire, à un terminal portable d'usager (1') d'un réseau radiotéléphonique cellulaire (2), et en particulier d'un réseau de type GSM, à partir d'un autre terminal (1 ou 01) du réseau, dans le cadre d'une communication radiotéléphonique établie. Le procédé prévoit le déclenchement d'une phase d'émission des données d'un groupe d'informations à transmettre, à l'initiative dudit autre terminal par le canal radio exploité par cet autre terminal dans le cadre de la communication établie, au travers d'un canal de service que comporte ce canal radio.

Les terminaux comportent des moyens actionnables à la demande pour extraire un groupe d'informations stockées et en assurer la transmission, ainsi que pour les stocker à la réception.

## Description

L'invention concerne un procédé destiné à permettre l'envoi d'un groupe d'informations à un terminal portable d'usager d'un réseau radiotéléphonique cellulaire à partir d'un autre terminal, en phase de communication établie, notamment dans le cas d'un réseau de type GSM, ainsi que les terminaux permettant la mise en oeuvre ce procédé.

Les terminaux portables d'usager des réseaux radiotéléphoniques cellulaires comportent classiquement des moyens de stockage, temporaire ou permanent, de données qui permettent de conserver des groupes d'informations et notamment des groupes d'informations de répertoire au profit des usagers. Des mises à jour des groupes d'informations conservés sont souvent nécessaires, notamment par ajout et/ou substitution. Ces mises à jour peuvent être initiées par l'usager désireux d'ajouter de nouvelles informations qu'il souhaite conserver et/ou de rafraîchir des informations devenues périmées. Elles peuvent aussi être initiées par un prestataire de services radiotéléphoniques et par exemple par le gestionnaire du réseau radiotéléphonique auquel un usager accède par l'intermédiaire d'un terminal déterminé.

Comme il est connu, les moyens de stockage que comporte un terminal portable d'un réseau radiomobile comprennent généralement une allocation de mémoire réservée à l'usager dans une mémoire modifiable, usuellement une mémoire de type RAM. Une autre allocation de mémoire est également réservée à chaque usager dans une mémoire modifiable du module ou carte d'identification d'abonné SIM que cet usager doit adjoindre à un terminal pour permettre à ce dernier d'être exploité. Un usager peut donc usuellement stocker des informations, et plus particulièrement des groupes d'informations d'identification relatives à d'autres usagers, dans un répertoire situé dans la mémoire modifiable d'un terminal qu'il utilise, ainsi que dans un répertoire situé dans la carte d'identification d'abonné dont il dispose.

Par ailleurs un prestataire de services peut lui aussi vouloir mettre à jour des groupes d'informations qui sont stockés dans les terminaux des usagers ayant recours à ses services, lorsque ces informations sont stockées dans les mémoires modifiables d'un terminal ou d'une carte d'identification d'abonné.

La mise à jour d'un répertoire de données dans une mémoire modifiable d'un terminal portable d'usager d'un réseau est une opération qui est généralement ressentie comme une contrainte par les usagers qui l'effectuent, même si elle s'avère bénéfique à l'usage. Il est donc important qu'elle soit simple à réaliser, rapide à effectuer et que les risques de manoeuvres erronées soient minimaux.

Ceci n'est notamment pas le cas, lorsque l'usager ne dispose que de son terminal portable et qu'il doit effectuer les opérations d'introduction de données nécessaires à une mise à jour à l'aide des moyens de commande et notamment du clavier qui équipe classiquement son terminal portable.

En l'absence d'arrangement particulier, un usager en communication avec un autre usager par voie radiotéléphonique doit lire à haute voix, devant le microphone du terminal qu'il utilise, les informations qu'il désire communiquer et qui sont enregistrées dans un répertoire de son terminal portable. Ces informations captées par ce microphone sont alors transmises par voie radio au terminal portable de l'autre usager sous la forme d'un message sonore numérisé. Elles doivent être reconverties sous forme sonore au niveau du terminal récepteur, afin d'être entendues par l'usager destinataire qui doit trouver un moyen pour les conserver, par exemple sous forme manuscrite, ou sous forme d'un enregistrement sonore. Il reste alors à cet usager destinataire à introduire dans son propre répertoire de terminal ou de carte d'identification d'abonné les informations qui viennent de lui être communiquées et qu'il désire stocker.

L'invention propose donc un procédé pour l'envoi d'un groupe d'informations, notamment un groupe d'informations de répertoire, à un terminal portable d'usager d'un réseau radiotéléphonique cellulaire et en particulier d'un réseau de type GSM, à partir d'un autre terminal du réseau, dans le cadre d'une communication radiotéléphonique établie.

Selon une caractéristique de l'invention, ce procédé prévoit une mise en oeuvre d'une phase d'émission des données d'un groupe de données d'information stockées et à transmettre, à l'initiative dudit autre terminal par le canal radio exploité par cet autre terminal dans le cadre de la communication établie, au travers d'un canal de service que comporte ce canal radio.

Elle propose aussi un terminal de réseau radiotéléphonique cellulaire et en particulier de réseau GSM, pour la mise en oeuvre du procédé évoqué ci-dessus. Selon une caractéristique de l'invention, ce terminal comporte des moyens actionnables à la demande pour extraire un groupe d'informations stockées, notamment sous forme modulaire, dans une mémoire modifiable qu'il comporte et des moyens de commande agencés pour assurer l'envoi de ce groupe d'informations par le canal radio exploité pour communiquer avec un autre terminal, au cours d'une communication avec cet autre terminal et au travers d'un canal de service que comporte ce canal radio.

Selon une autre caractéristique de l'invention, le terminal comporte aussi des moyens de commande organisés pour lui permettre de stocker au moins temporairement, dans une mémoire modifiable dont il dispose, un groupe d'informations qui lui est communiqué à partir d'un autre terminal au cours d'une communication établie avec ce terminal, dans le cadre d'un envoi réalisé par l'intermédiaire du canal de service exploité par ledit autre terminal.

L'invention, ses caractéristiques et ses avantages sont précisés dans la description qui suit en liaison avec les figures évoquées ci-dessous.

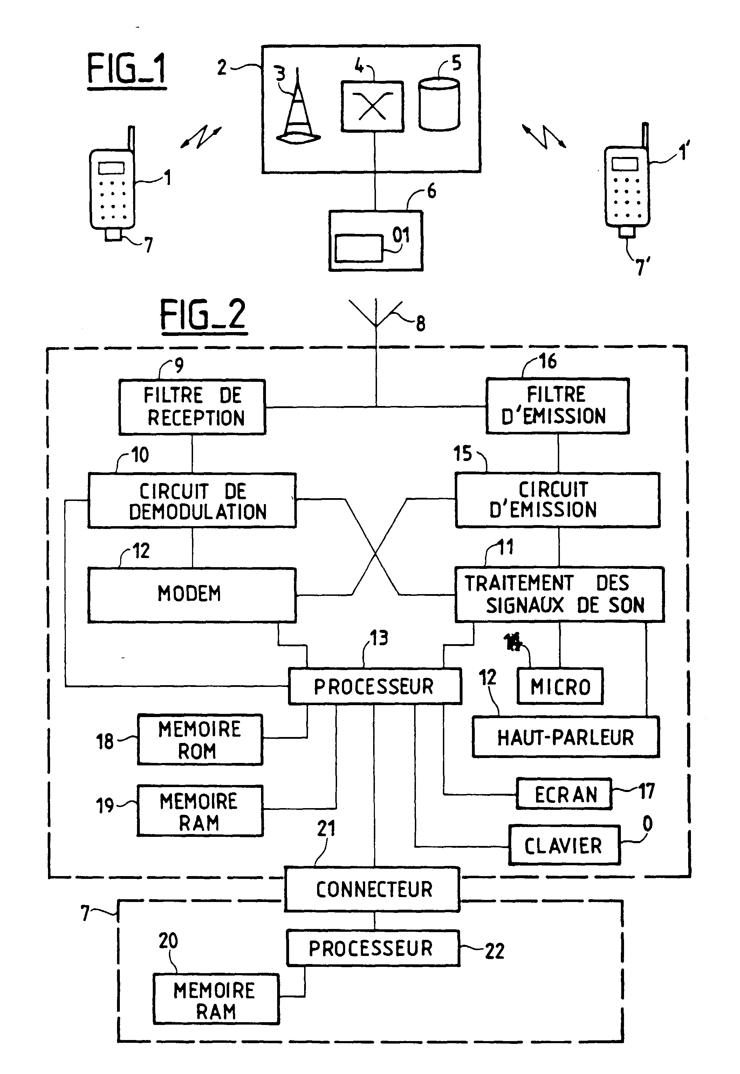

La figure 1 présente un schéma synoptique d'un réseau radiotéléphonique. La figure 2 présente un schéma synoptique d'un terminal portable d'usager pour réseau radiotéléphonique.

Le synoptique de réseau radiotéléphonique présenté en figure 1 est relatif à un réseau radiotéléphonique où une pluralité d'usagers équipés de terminaux portables d'usager symbolisés par deux d'entre eux référencés 1 et 1' sont susceptibles de communiquer par voie radiotéléphonique par l'intermédiaire des équipements d'un réseau 2.

Le réseau 2 est par exemple un réseau d'un système global de communications entre mobiles GSM, il comporte au moins une station de base de transmission 3 permettant de communiquer par voie radio avec les terminaux portables 1, 1', cette station étant ici représentée par une tour d'antenne.

Les stations de base de transmission sont géographiquement disséminées, elles sont reliées entre elles par un réseau de commutation et de transmission 4 qui permet leur interconnexion sélective. Ceci est exploité pour l'établissement de communications entre des terminaux portables, lorsque ceux-ci sont desservis par des stations de base différentes à portée respective desquelles ils sont situés.

Un ensemble de contrôle 5, comportant notamment des bases de données relatives aux usagers et des moyens de traitement de l'information appropriés, permet la gestion des communications entre usagers. Cet ensemble de contrôle 5 est supervisé par un ou plusieurs gestionnaires, dont notamment un gestionnaire principal de réseau et éventuellement des gestionnaires de services qui disposent à cet effet d'un ensemble de moyens d'intervention 6. Ces derniers permettent notamment de transmettre des informations aux éléments constitutifs du réseau 2 ainsi qu'aux terminaux portables 1, 1'. Ceux-ci sont accessibles à partir de terminaux spécialisés usuellement fixes et ici symbolisés par un terminal 01.

Comme il est connu, les usagers doivent disposer de moyens leur permettant de s'identifier, ces moyens sont constitués par des modules d'identification d'abonné qui sont par exemple du type carte SIM, telles les cartes 7 et 7', et qui sont à associer par chaque usager au terminal portable qu'il veut utiliser. Comme connu, l'information d'identification propre à une carte SIM insérée dans un terminal est communiquée à la station de base auprès de laquelle ce terminal se localise lorsqu'il est mis en service. Chaque terminal portable comporte aussi une identification qu'il est apte à communiquer par voie radio vers une station de base 3 auprès de laquelle il se localise.

Il est sommairement rappelé en liaison avec la figure 2 qu'un terminal portable 1 est supposé être un émetteur-récepteur radio de signaux numériques ou numérisés. Un tel terminal comporte de ce fait une interface d'émission-réception de signaux voix-données, une unité de commande incorporant au moins un processeur et diverses mémoires, ainsi qu'une interface homme-terminal.

L'interface d'émission-réception qui est classiquement reliée à une antenne 8 prévue pour capter un signal radio associant un signal radiotéléphonique et des signaux de commande. Un filtre de réception 9 permet d'extraire le signal radiotéléphonique reçu afin de le transmettre à un circuit de démodulation 10. Ce dernier est relié d'une part à un circuit de traitement des signaux téléphoniques 11, couramment dit de traitement des signaux de son, et d'autre part à un modem 12. Le circuit de traitement 11 est relié à une unité de restitution de signaux sonores ici représentée par un haut-parleur 12, il est aussi relié à un processeur 13 de l'unité de commande du terminal 1 pour la transmission des signalisations de type téléphonique éventuellement transmises dans le signal radiotéléphonique reçu. Le circuit de traitement 11 et le modem 12 sont exploitables l'un et l'autre tant en émission qu'en réception sous le contrôle du processeur 13 avec lesquels ils communiquent.

Le circuit de traitement 11 est en conséquence relié à une unité transductrice de signaux de son représentée ici par un microphone 14 pour la prise en compte des signaux sonores reçus par le terminal et plus particulièrement produits par l'usager. Il traite également les éventuelles signalisations de type téléphonique, telles des signalisations DTMF, qui lui sont transmises par l'unité de commande du terminal, ici via le processeur 13. Ces signalisations sont notamment produites à l'instigation de l'usager, au cours de certaines phases d'exploitation, par exemple par action sur des moyens de commande comportés par le terminal et ici symbolisés par un clavier de commande 0. Les signaux pris en compte à des fins d'émission par le circuit de traitement 11 sont transmis à un circuit d'émission 15 chargé notamment de les moduler, il en est de même pour les signaux de données qui sont éventuellement transmis par le modem à l'initiative de l'usager ou de l'unité de commande du terminal 1. Le circuit d'émission 15 est relié à l'antenne 8 par un filtre de transmission 16 chargé d'éliminer les composantes de signal autres que celles qui font partie du canal d'émission par l'intermédiaire duquel le terminal communique avec le réseau 2.

Les données reçues par le terminal qui sont prises en compte, soit par l'intermédiaire du circuit de traitement 11, soit par l'intermédiaire modem 12, sont ici supposées transmises à l'unité de commande de ce terminal, ici via le processeur 13 qui se charge de les orienter à des fins d'exploitation. Les données affichables sont ainsi supposées pouvoir être transmises à un écran d'affichage 17 de manière à pouvoir être présentées à l'usager.

Des mémoires inscriptibles et préférablement modifiables permettent aussi de stocker les données dont une utilisation ultérieure est possible ou prévue. Des données, notamment de programme, sont enregistrées de manière permanente en particulier au profit du processeur 13 et par exemple dans une mémoire 18, de type ROM.

Des mémoires modifiables de stockage de données 19 et 20 sont supposées localisées d'une part au niveau du terminal et d'autre part au niveau des cartes d'identification d'abonné 7, 7'. La mémoire 20 d'une carte est accessible par l'intermédiaire d'un connecteur dissociable 21 au moyen duquel cette carte se connecte à l'unité de commande du terminal, soit ici au processeur 13, et via un processeur de contrôle d'accès 22 de la carte.

Comme indiqué plus haut dans le préambule de cette demande, il est classiquement prévu de stocker des informations dans les mémoires modifiables, telles 19 et 20, qui sont exploitables dans un terminal portable d'usager 1 ou 1' muni d'une carte d'identification d'abonné 7 ou 7'.

Ces informations peuvent être plus particulièrement destinées à l'usager, elle peuvent être introduites à cet effet soit par cet usager, soit encore par un prestataire de service utilisant un terminal 01 approprié.

Ces informations sont souvent assemblées par groupes de constitution identiques ou similaires et stockées sous forme modulaire pour des raisons de facilité d'exploitation par l'usager, ce sont par exemple des groupes distincts d'un même répertoire, notamment d'un répertoire de numéros d'appel radiotéléphoniques. Un groupe est susceptible de contenir une information d'identification de groupe, constituée sous forme modulaire, classiquement un nom de personne ou de société. Cette information est couramment accompagnée d'au moins un autre module de référence, qui correspond par exemple à un numéro d'appel radiotéléphonique, un numéro de télécopie, une adresse, etc.

Un usager peut être amené à vouloir communiquer un groupe de données d'informations qu'il stocke à un autre usager au cours d'une communication. Un prestataire de services radiotéléphoniques peut aussi vouloir communiquer un ou des groupes d'information aux abonnés d'un réseau radiotéléphonique. Cette communication peut notamment intervenir dans le cadre d'une mise à jour, réalisée par exemple lorsqu'un terminal d'usager actif se localise auprès d'une station de base.

Selon l'invention, une phase d'émission est lancée par l'utilisateur d'un terminal, tel 1 ou 01, ayant à communiquer un groupe d'un ou plusieurs modules, qu'il stocke, à un autre terminal, tel 1', avec lequel il est entré en communication par l'intermédiaire du réseau radiotéléphonique 2. Cette émission s'effectue par l'intermédiaire d'un canal de service du canal radio que ce terminal 1 ou 01 exploite pour communiquer dans le cadre de la communication qui est alors établie avec le terminal destinataire 1'.

Le canal de service est par exemple le canal de signalisation prévu dans le canal radio qu'exploite le terminal 1 pour communiquer avec le terminal 1'.

Le canal de service est par exemple un canal SMS de courts messages de service dont dispose le terminal 01 d'un prestataire de service dans le cadre d'une communication qu'il a établi avec le terminal destinataire dans les conditions évoquées plus haut. Un découpage de groupe d'information est éventuellement réalisé avant émission, si le format admissible par le canal de service utilisé l'implique. Il est alors suivi d'une reconstitution du groupe par l'unité de commande du terminal destinataire.

Une extraction d'un groupe informations stockées à transmettre doit être déclenchée préalablement à la transmission par l'usager envoyeur, cette transmission devant s'effectuer en phase de communication de l'envoyeur avec le destinataire. Cette extraction peut éventuellement concerner plusieurs groupes d'information. Une telle extraction est par exemple occasionnée par une commande sélective effectuée par l'intermédiaire du clavier 0 du terminal dans lequel les groupes d'informations sont stockés. Elle se traduit par une lecture de la partie de mémoire modifiable du terminal envoyeur où les informations à transmettre sont conservées. Cette partie de mémoire peut appartenir à l'une ou l'autre des mémoires modifiables 19 ou 20 dont dispose l'usager au niveau du terminal portable qu'il utilise. Les données correspondant aux informations à transmettre sont alors communiquées au modem 12 par l'intermédiaire de l'unité de commande du terminal et éventuellement après un formatage. Le modem transmet alors les données dûment modulées au circuit d'émission 15 qui assure leur transmission par voie radio dans le canal de service prévu du canal radio qui est utilisé pour émission par le terminal envoyeur. L'initiative de la communication de telles informations par un terminal à un autre peut bien entendu être due à l'un ou l'autre des deux usagers en communication.

Le terminal portable qui reçoit ses données relatives à un groupe d'informations qui lui sont radiotéléphoniquement communiquées de cette manière en assure préférablement la démodulation au moyen du modem 12 qu'il comporte. Il les transmet à des fins de stockage au moins temporaire dans la mémoire modifiable 19 associée au processeur 13 de l'unité de commande qu'il comporte. Un affichage du groupe de données sur l'écran 17 du terminal est préférablement réalisé pour permettre au destinataire de contrôler ce qu'il a reçu. Ce stockage permet éventuellement à ce destinataire d'exploiter directement au moins un module contenu dans un groupe s'il en a immédiatement besoin, par exemple pour appeler un autre terminal dont le numéro d'appel vient de lui être communiqué. Un stockage permanent d'un groupe d'informations peut aussi être effectué dans l'une ou l'autre des mémoires modifiables 19 et 20 dont dispose le terminal du destinataire lorsqu'il est équipé d'une carte d'identification 7. Cette opération de stockage est par exemple réalisée par le destinataire par commande au travers du clavier 0 du terminal dont il dispose, d'une manière correspondant à celle qui lui permet d'entrer lui-même des données d'information relatives à un module d'information dans ce terminal, en dehors des phases de communication.

La mise en oeuvre du procédé selon l'invention à partir d'un terminal 00 envoyeur usuellement fixe et non radiotéléphonique d'un prestataire de service est susceptible de s'effectuer dans des conditions similaires, alors que le terminal destinataire visé est entré en communication avec une station de base de transmission 3 du réseau radiotéléphonique. Elle s'effectue alors préférablement par l'intermédiaire du canal SMS de courts messages de service auquel le terminal 00 accède par l'intermédiaire d'un point d'accès au réseau de commutation 4 qui dessert la station de base de transmission 3 auprès de laquelle le terminal destinataire s'est localisé. L'exploitation d'un groupe de données d'information par le terminal destinataire s'effectue pratiquement dans les mêmes conditions que précédemment à partir du moment où les données d'information reçues par voie radio ont été démodulées et extraites du canal SMS ayant servi à leur transmission, elle ne sera donc pas reprise à nouveau ici. Il doit être compris que les terminaux impliqués dans de telles communications comportent des moyens notamment de type logiciel de commande qui sont exploités dans leurs unités de commande respectives pour la mise en application du procédé selon l'invention. Ces moyens ne sont pas détaillés ici dans la mesure où leur réalisation relève de l'application de connaissances bien connues de l'homme de métier.

## Revendications

1. Procédé pour l'envoi d'un groupe d'informations, notamment d'informations de répertoire, à un terminal portable d'usager (1) d'un réseau radiotéléphonique cellulaire (2) et en particulier d'un réseau de type GSM, à partir d'un autre terminal (1 ou 01) du réseau, dans le cadre d'une communication radiotéléphonique établie, caractérisé en ce qu'il comporte une mise en oeuvre d'une phase d'émission des données d'un groupe d'informations stockées et à transmettre, à l'initiative dudit autre terminal, par le canal radio exploité par cet autre terminal dans le cadre de la communication établie, au travers d'un canal de service que comporte ce canal radio.

2. Procédé, selon la revendication 1, selon lequel les données d'un groupe d'informations sont stockées sous la forme de modules individualisés, sont transmises dans un format correspondant à celui en vigueur sur le canal de service emprunté, le groupe étant alors reconstitué après réception pour affichage et/ou exploitation immédiate et/ou différée par le terminal récepteur.

3. Procédé selon l'une des revendications 1, 2, dans lequel est prévu un stockage au moins temporaire du groupe d'informations reçues par un terminal, dans le cadre d'un envoi d'informations réalisé par l'intermédiaire du canal de service exploité par ledit autre terminal avec lequel communique.

4. Procédé, selon l'une des revendications 1 à 3, dans lequel le canal de service exploité est le canal SMS prévu pour l'envoi de courts messages de service à partir dudit autre terminal.

5. Procédé, selon l'une des revendications 1 à 3, dans lequel le canal de service exploité est le canal de signalisation comporté par le canal radio exploité par ledit autre terminal.

6. Procédé selon la revendication 4, dans lequel les données de groupe d'informations stockées qui sont communiquées proviennent d'un terminal (01) d'un prestataire de service du réseau radiomobile.

7. Procédé selon la revendication 5, dans lequel les données de groupe d'informations stockées qui sont communiquées sont extraites d'une mémoire modifiable (19, 20) d'un terminal portable d'usager.

8. Terminal de réseau radiotéléphonique cellulaire et en particulier de réseau GSM, pour la mise en oeuvre du procédé selon l'une des revendications 1 à 7, caractérisé en ce qu'il comporte des moyens actionnables à la demande pour extraire un groupe d'informations stockées, notamment sous forme modulaire, dans une mémoire modifiable qu'il comporte et des moyens de commande agencés pour assurer l'envoi de ce groupe d'informations par le canal radio exploité pour communiquer avec un autre terminal, au cours d'une communication avec cet autre terminal et au travers d'un canal de service que comporte ce canal radio.

9. Terminal portable d'usager selon la revendication 8, caractérisé en ce qu'il comporte des moyens de commande organisés pour lui permettre de stocker au moins temporairement, dans une mémoire modifiable dont il dispose, un groupe d'informations qui lui est communiqué à partir d'un autre terminal au cours d'une communication établie avec ce terminal, dans le cadre d'un envoi réalisé par l'intermédiaire du canal de service exploité par ledit autre terminal.
